# EUROPEAN PATENT SPECIFICATION

(11) **EP 2 233 373 B1**
(45) Date of publication and mention of the grant of the patent: **09.05.2012**
(21) Application number: 10001938.9
(22) Date of filing: 25.02.2010
(51) Int. Cl.: B60R 21/34

(54) **automobile equipped with speaker unit**
Automobil mit Lautsprechereinheit
Automobile équipée d'une unité de haut-parleur

(30) Priority: 26.03.2009 JP 2009077602
(43) Date of publication of application: 29.09.2010
(73) Proprietor: Yamaha Corporation, Hamamatsu-shi, Shizuoka 430-8650 (JP)
(72) Inventor: Noro, Masao, Hamamatsu-shi Shizuoka (JP)
(74) Representative: HOFFMANN EITLE

(56) References cited:
- EP-A2- 1 561 641
- JP-A- 2008 168 676
- US-A1- 2005 200 462

## Description

### BACKGROUND OF THE INVENTION

### 1. Technical Field

The present invention relates to a vehicle and to a technique for causing persons around the vehicle to recognize the presence of the vehicle. It is applicable to automobiles.

### 2. Background Art

In recent years, from the viewpoint of environmental protection, a transition is now proceeding from a vehicle using as a power source an internal combustion engine, such as a gasoline engine that operates on gasoline, to an electric vehicle using as a power source an electric motor that operates on a power supply, a fuel cell vehicle, and a hybrid vehicle using an internal combustion engine and an electric motor in combination. Unlike the internal combustion engine, a vehicle that is driven by an electric motor employed as a power source generates very small noises while driving, which raises a problem of pedestrians, and others, hardly noticing an approach of a vehicle. A pneumatic vehicle driven by compressed air employed as motive energy is also conceived to produce similar problems.

Accordingly, in order to cause pedestrians to notice an approach of a vehicle, a technique for generating sounds, such as an alarm sound and an engine sound, is described in, for instance, JP-A-11-27810 . Techniques for producing an alarm sound, and the like, when a pedestrian is detected are described in, for instance, JP-A-2006-298245 and JP-A-2008-110635.

US 2005/0200462 A1 describes an apparatus for notifying presence of a vehicle to a periphery of the vehicle. It includes a control unit that controls an operating unit that operates to cause the vehicle to drive, generating an operation sound; a judging unit that judges whether it is necessary to notify the presence of the vehicle to the periphery of the vehicle; and a notifying unit that notifies, when the judging unit judges that it is necessary to notify the presence of the vehicle to the periphery of the vehicle, the presence of the vehicle to the periphery of the vehicle using the operation sound, by changing a content of a control by the control unit.

EP 1 561 641 A2 describes a dummy sound generating apparatus which includes a dummy sound information storage unit that stores one or more dummy sounds, and an outer generating unit that generates one of the one or more dummy sounds outside of the vehicle upon reception of a dummy sound generation instruction signal. The dummy sound generating apparatus also includes a generation place information storage unit that stores information on a place where a dummy sound is to be generated a current position information acquiring unit that acquires information on a current position of the vehicle, and a control unit that outputs a dummy sound generation instruction signal to the outer generating unit when the current position acquired by the current position information acquiring unit matches with information on a place stored in the generation place information storage unit.

JP-A-2008168676 describes a vehicle approaching informing device which operates in such a way that an approaching informing sound that is a high frequency sound is produced from a speaker of a sound producing device to an object to be informed that is present within an approaching informing region where a distance from a vehicle is short, for example, a walking person so as to inform the walking person of the approaching of the vehicle. In addition, the sound producing device produces a far informing sound that is a low frequency sound of which frequency is lower than that of the approaching informing sound to a far informing region where a distance from the vehicle is longer than that of the approaching informing region. Due to this fact, when the approaching informing sound with a high frequency is made loud, it is possible to restrict the far informing sound with a lower frequency than that of the approaching informing sound from being made loud.

So long as a speaker for generating an alarm sound, and the like, produces bass sounds, the sounds are less likely to be blocked by a vehicle body because of its frequency band characteristic even when the speaker is set in the vehicle body and can be output to the outside. Meanwhile, generation of middle-high frequency sounds is used for imparting directivity that is carried out for diminishing noises in surroundings or make pedestrians clearly catch sounds. The middle-high frequency sounds exhibit characteristics of being easily blocked and less likely to circulate. It is therefore necessary to set a speaker on a vehicle body, such as a front or rear of a vehicle, and to provide an opening in a direction in which sounds are to be output, so as to prevent the vehicle body from blocking sounds from the speaker. Therefore, a restriction on the location of the opening also places a constraint on the design of the vehicle body.

The present invention has been conceived in the light of the circumstance and aims at providing a vehicle that provides pedestrians with an alarm by means of sounds and that makes it possible to let the pedestrians clearly catch the alarm while diminishing noises to surroundings and enhance the degree of design freedom of a vehicle body.

In order to achieve the aim, there is provided a vehicle including: a vehicle body; an electric motor; wheels that are provided between the vehicle body and a road surface and that are rotated by transmitted motive power, to thus drive the vehicle body; a power transmission section that transmits motive power generated by the electric motor to the wheels; a detection section that detects a driving speed of the vehicle body; a speaker unit that outputs a sound based on a supplied audio signal downwardly from an undersurface of the vehicle body so as to reflect on the road surface, thereby to output the reflected sound to surroundings of the vehicle body; a supply section that acquires an audio signal and supplies the audio signal to the speaker unit when a driving speed of the vehicle body detected by the detection section is less than a preset speed; an internal combustion engine; and a power control unit that drives the internal combustion engine when the driving speed of the vehicle body detected by the detection section comes to a preset speed or more, wherein the power transmission section transmits motive power generated as a result of driving of the internal combustion engine to the wheels; the supply section stops supply of the audio signal when the internal combustion engine is driven; the speaker unit includes a speaker array of multiple speakers, and the speaker control unit is arranged to control a direction of the sound output by the speaker unit at a predetermined angle with respect to a traveling direction of the vehicle.

The vehicle in another aspect may be configured by further including: a bass speaker unit having a speaker that is supplied with an audio signal of a low frequency band which is lower than a frequency band of the audio signal supplied to the speaker unit and that outputs sounds based on the audio signal; a diaphragm that has a resonance frequency in the low frequency band and that produces resonance by means of an output of sounds from the speaker; and a housing that defines therein a sealed space along with the diaphragm, wherein the speaker is provided in the sealed space; the supply section supplies the speaker unit with an audio signal of a frequency band that is higher than the low frequency band and supplies the audio signal of low frequency band to the speaker of the bass speaker unit; and sound output from the speaker unit exhibits directivity.

The vehicle may be configured in that the predetermined angle is reduced as the driving speed detected by the detection section increases.

The vehicle may be configured in that a magnitude of the predetermined angle changes in accordance with the traveling direction by operation of an operation section.

The vehicle in another aspect may be configured in that the speaker unit includes a front speaker unit, a rear speaker unit, a right speaker unit, and a left speaker unit, that are provided on a front, a rear, a right, and a left of the vehicle body, respectively.

The present invention makes it possible to provide a vehicle that provides pedestrians with an alarm by means of sounds and that makes it possible to let the pedestrians clearly catch the alarm while diminishing noises to surroundings and enhance the degree of design freedom of a vehicle body.

### BRIEF DESCRIPTION OF THE DRAWINGS

In the accompanying drawings:
Fig. 1 is a block diagram for describing a configuration of a vehicle of an embodiment of the present invention;
Figs. 2A and 2B describe a configuration of a speaker array of the embodiment of the present invention;
Figs. 3A to 3E describe a configuration of a bass speaker of the embodiment of the present invention;
Fig. 4 describes an installation location of the speaker array to be mounted in the vehicle of the embodiment of the present invention acquired when a vehicle body is viewed sideways;
Fig. 5 describes the installation location of the speaker array to be mounted in the vehicle of the embodiment of the present invention acquired when a vehicle body is viewed from the below;
Fig. 6 describes directivity of sounds output from the speaker array of the embodiment of the present invention;
Fig. 7 describes an example installation location of a speaker array of a second modification;
Fig. 8 describes an example installation location of a speaker array of a third modification; and
Fig. 9 describes an example installation location of a speaker array of a fourth modification.

### DETAILED DESCRIPTION OF THE EXEMPLARY EMBODIMENTS

An embodiment of the present invention is hereinbelow described.

### <Embodiment>

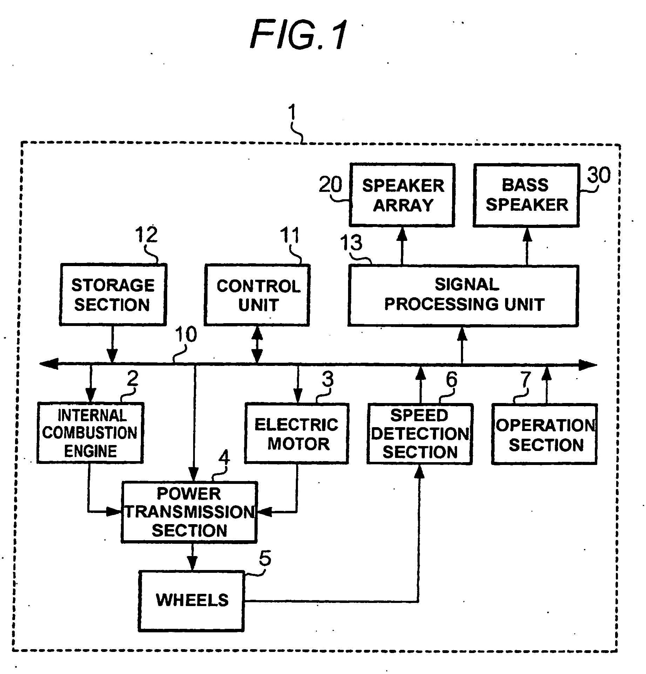

Fig. 1 is a block diagram for describing a configuration of a vehicle 1 of an embodiment of the present invention. The vehicle 1 is a hybrid vehicle that drives by taking an internal combustion engine 2 or an electric motor 3 as a power source. A control unit 11 has a CPU (Central Processing Unit), ROM (Read Only Memory), RAM (Random Access Memory), and the like. The CPU loads a control program into the RAM from the ROM or a storage section 12 and executes the program, thereby controlling respective sections of the vehicle 1 by way of a bus 10.

The internal combustion engine 2 is driven by burning gasoline, and the like, to thus produce motive power. Driving of the internal combustion engine 2 is controlled by means of control operation of the control unit 11. Specifically, when driving speed of the vehicle 1 detected by a speed detection section 6 surpasses a preset speed, the control unit 11 controls the internal combustion engine 2 so as to start driving.

The electric motor 3 is an electric motor that drives on a power supply received from a rechargeable secondary cell or a fuel cell, thereby generating motive power. Driving of the electric motor 3 is controlled by control operation of the control unit 11. Specifically, the control unit 11 controls, from start of driving, the electric motor 3 so as to run in such a way that the driving speed of the vehicle 1 detected by the speed detection section 6 to be described later reaches a preset speed.

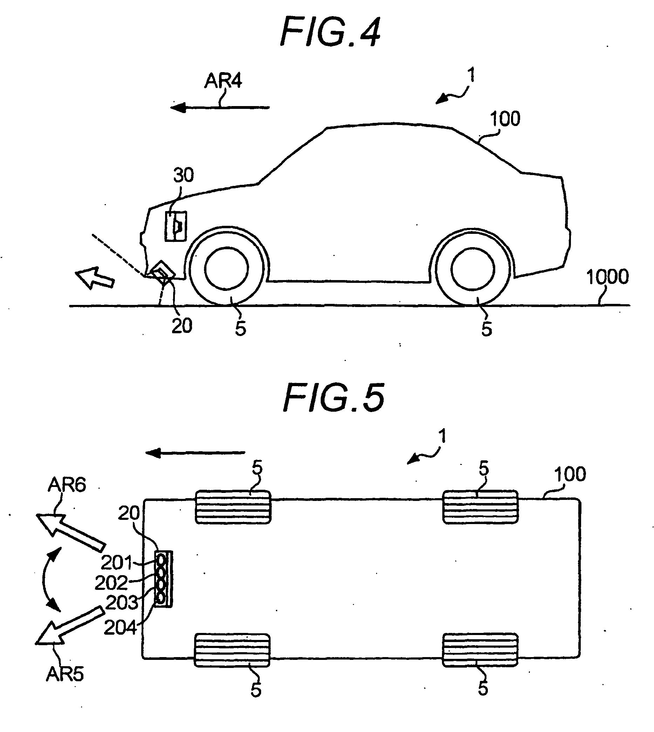

A power transmission section 4 transmits motive power generated by the driving internal combustion engine 2 or the electric motor 3 to wheels 5. The control unit 11 controls which one of motive powers is transmitted. The wheels 5 are provided between a road surface 1000 and a vehicle body 100 (see Fig. 4) and are rotated by the motive power transmitted from the power transmission section 4, to thus drive the vehicle 1 (the vehicle body 100).

The speed detection section 6 detects the driving speed of the vehicle 1 from the rotational speed of the wheels 5 and outputs a detection result to the control unit 11. The operation section 7 is operation means, such as a steering wheel, an accelerator, a brake, a shift lever, a control switch, and the like, for control the behavior of the vehicle 1. In response to operation, the amount of motive power generated by the internal combustion engine 2 or the electric motor 3, the orientation of the wheels 5, a gear ratio used when motive power is transmitted by the power transmission section 4, and the like, are controlled.

The storage section 12 is a mass storage unit, such as nonvolatile memory, and stores an audio signal for generating a pseudo engine sound simulating an engine sound. The audio signal consists of a middle-high frequency channel signal output by a signal processing unit 13 to be described later to a speaker array section (a speaker unit) 20 and a low frequency channel signal of a low frequency band including frequency bands that are lower than the frequency band of the middle-high frequency channel. The frequency band of the middle-high frequency channel and the frequency band of the low frequency channel may also or may not overlap each other.

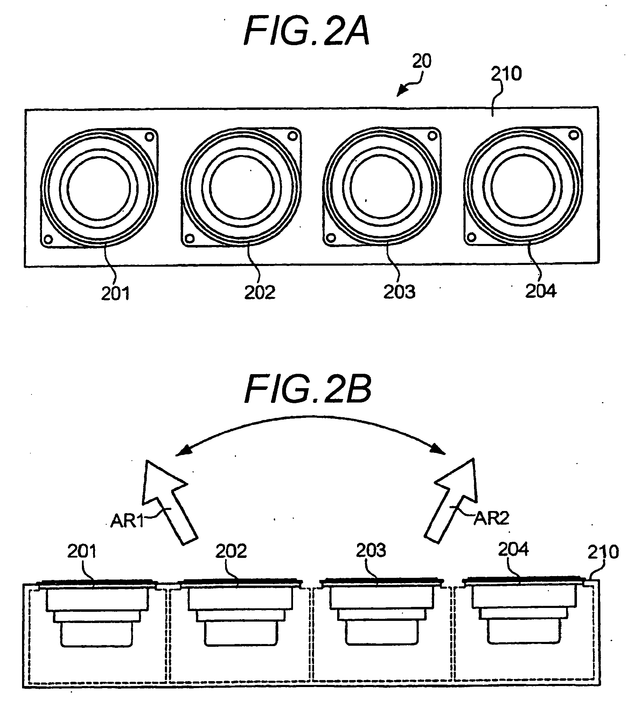

Figs. 2A and 2B describe the configuration of the speaker array section 20. Fig. 2A is a view acquired when speakers 201, 202, 203, and 204 of the speaker array section 20 are viewed from the front in a direction in which sounds are output. Fig. 2B shows a cross section of the speakers 201, 202, 203, and 204 taken along a plane including a sound axis of the speakers. As shown in Figs. 2A and 2B, the speaker array section 20 has multiple (four in the embodiment) speakers 201, 202, 203, and 204 that are housed in a housing 210 while arranged in one row and outputs a sound based on a supplied signal.

Turning back to Fig. 1, descriptions continue. Under control of the control unit 11, the signal processing unit 13 acquires an audio signal stored in the storage section 12. A middle-high frequency channel signal of the thus-acquired audio signal is supplied to the speaker array section 20, and a low-frequency channel signal of the audio signal (a bass audio signal) is supplied to a bass speaker 30. By means of control operation of the control unit 11, the amount of delay and output level of the signal supplied respectively to the speakers 201, 202, 203, and 204 are adjusted when the signal is supplied to the speaker array section 20. As indicated by arrows AR1 and AR2 shown in Fig. 2B, directivity (a direction and a focal point) of the sound output from the speaker array 20 is controlled in the plane within which the speakers 201, 202, 203, and 204 are arranged.

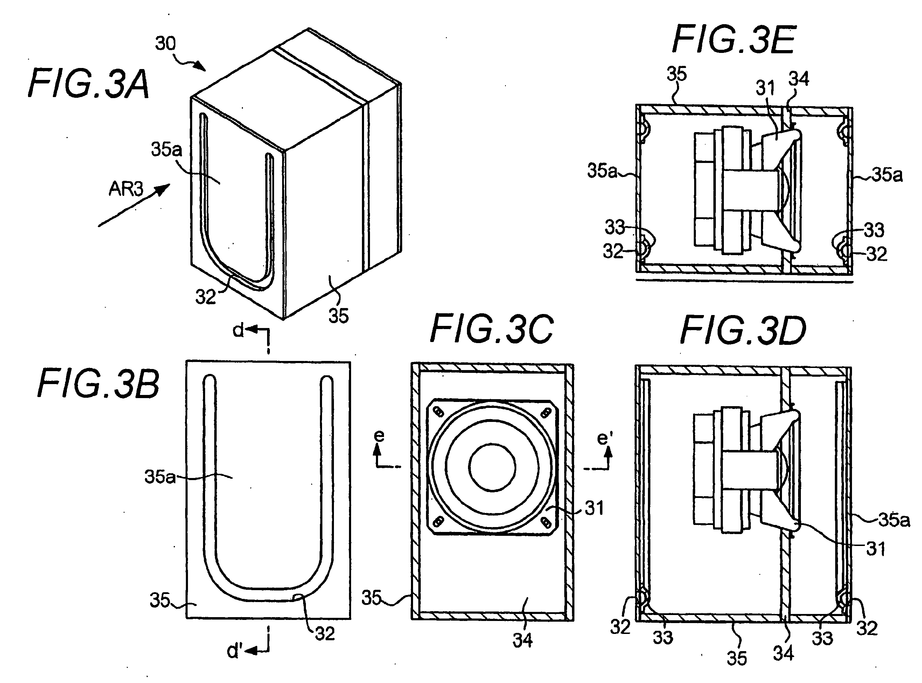

Figs. 3A to 3E describe the configuration of the bass speaker (the low frequency band sound speaker) 30. Details of the structure, principle, and effect of the bass speaker 30 are described in JP-B-4148253, JP-B-4059259, JP-B-4059263, and JP-B-4059272, and other patents, and hence the structure of the bass speaker is briefly described.

Fig. 3A is a perspective view of the bass speaker 30. As shown in Fig. 3A, the bass speaker 30 has a housing 35 that is a substantially parallelepiped enclosure, and a U-shaped elongated slit opening 32 is cut in the housing 35. The opening 32 is provided both in a surface shown in Fig. 3A and in the opposing surface. A diaphragm 35a is a plate-shaped member disposed inside the U-shaped opening. An upper portion of the diaphragm 35a is continual to the housing 35, and the other portion of the diaphragm 35a is separated from the housing 35 by the U-shaped opening 32. Therefore, the diaphragm 35a can freely vibrate while its upper end is fixed.

Fig. 3B is a view taken in a direction of arrow AR3 shown in Fig. 3A (i.e., in a direction of a surface on which the diaphragm 35a is provided). Fig. 3D is a cross-sectional view taken along cut line d-d' shown in Fig. 3B. As shown in Fig. 3D, an internal space of the housing 35 is partitioned by a partition plate 34 provided with a speaker 31, and the diaphragm 35a is present in both spaces. The opening 32 is covered with an edge 33 having an arc-shaped cross-sectional profile from the inside of the housing 35. Thus, the inside of the housing 35 is thereby sealed, to thus maintain hermeticity.

As mentioned above, one side of the diaphragm 35a is connected to the housing 35, to thus act as a stationary end, so that the diaphragm 35a itself exhibits a supporting function. Therefore, the edge 33 does not need to support the weight of the diaphragm 35a. A member that has a function of maintaining hermeticity and that does not hinder vibration of the diaphragm 35a and allows ease of vibration can be used for the edge.

Since the speaker 31 exhibits a frequency characteristic that allows outputting of a sound based on a low-frequency channel signal, a soft member must be used for a speaker edge that supports a cone. In terms of weather resistance, the speaker is often inferior to a speaker that does not need to use such a member and that outputs a mid-high frequency. However, by means of the above structure, the speaker is sealed by the housing 35 having rigidity and the edge 33, so that the weather resistance of the speaker is enhanced.

Fig. 3C is a view of the partition plate 34 on which the speaker 31 is mounted in a direction in which the speaker 31 outputs sounds. Fig. 3E is a cross-sectional view taken along cut line e-e' shown in Fig. 3C.

The speaker 31 outputs sounds based on a low frequency channel signal supplied from the signal processing unit 13. The diaphragm 35a has a resonance frequency in a frequency band of the low frequency channel signal and produces resonance from the sounds output from the speaker 31, thereby amplifying the low frequency sounds. It is desirable that the minimum resonance frequency of the diaphragm 35a be lower than the frequency band of the mid-high frequency channel signal.

Fig. 4 describes an installation position of the speaker array section 20 to be mounted in the vehicle 1 of the embodiment of the present invention acquired when the vehicle body 100 is viewed sideways. As shown in Fig. 4, in the present embodiment, the speaker array section 20 is mounted at a front position on a undersurface of the vehicle body 100 of the vehicle 1 with respect to a traveling direction (a direction indicated by arrow AR4). An output direction of sounds is oriented in a downward direction with respect to the vehicle body 100. In respective drawings which will be provided below, the left side of the drawings is taken as a traveling direction of the vehicle 1 as in Fig. 4.

The word "downward direction" does not mean only a direction parallel to the direction of a normal to the road surface 1000 but also includes inclined downward directions having horizontal components with respect to the road surface 1000. Specifically, the essential requirement for a downward direction is to face the road surface 1000 with respect to the vehicle body 100 when compared with the plane parallel to the road surface 1000.

Sounds output from the speaker array section 20 undergo reflection on the road surface 1000, to thus be emitted to surroundings of the vehicle body 100. A traveling direction of the sounds output from the speaker array section 20 is limited by the road surface 1000 and the vehicle body 100. Therefore, the influence of noise on a range where pedestrian need not to be warned of an approach of the vehicle 1 by sounds; for instance, a space above the vehicle body 100, can be diminished, and the sounds can be caused to efficiently reach the pedestrians on the ground.

In contrast with the speaker 31 of the bass speaker 30, the speakers 201, 202, 203, and 204 of the speaker array section 20 output mid-high frequency sounds. Therefore, if a substance that blocks a sound output path is present, sounds will significantly be dampened. Therefore, the speaker array cannot be mounted in a sealed space. For this reason, the speaker array except a speaker grill is exposed to the external environment. However, as mentioned previously, a member that is superior to that member of the speaker 31 in terms of weather resistance can be used to the speakers 201, 202, 203, and 204. Hence, a problem will not arise. Further, the speaker array section 20 is mounted on the undersurface side of the vehicle body 100, which eliminates a necessity for creation of an opening in the side surface of the vehicle body 100, and the like, for enabling output of sounds to the outside. Therefore, the degree of design freedom of the vehicle body 100 can be enhanced.

The bass speaker 30 is mounted in the vehicle body 100; for instance, an engine room where the internal combustion engine 2, the electric motor 3, and the like, are accommodated. Since the bass speaker 30 outputs sounds in a low frequency band, the sounds hardly exhibit directivity. Further, the sounds are less likely to be blocked by the vehicle body 100, and sounds spread to the surroundings of the vehicle body 100. The vehicle 1 may also have a structure not including the bass speaker 30.

Fig. 5 describes the installation location of the speaker array section 20 acquired when the vehicle body 100 is viewed from the below (the road side 1000). As shown in Fig. 5, the speaker array section 20 is mounted at a front position on the undersurface side of the vehicle body 100. Directivity of the sounds output from the speaker array section 20 is thereby controlled in a horizontally right-left direction with respect to the traveling direction of the vehicle body 100. Although the speaker array is mounted in the vicinity of the center in the right-left direction in Fig. 5, the speaker array may also be positioned closely to one side of the right and left side surfaces of the vehicle body 100 (i.e., either side in a vertical direction of the drawing). Although the horizontal components of sound axes of the respective speaker 201, 202, 203, and 204 are oriented to the front of the vehicle body 100 but may also be oriented toward other directions. The above descriptions are directed toward the structure of the vehicle 1.

Sound output operation of the vehicle 1 is now described. First, the operation section 7 of the vehicle 1 is operated, to thus start the vehicle 1, whereupon the control unit 11 starts driving of the electric motor 3, thereby causing the power transmission section 4 to transmit motive power of the electric motor 3. A driver can thereby drive the vehicle 1 by driving the operation section 7. Under control of the control unit 11, the signal processing unit 13 reads and acquires an audio signal from the storage section 11; supplies the signal to the speaker array section 20 and the bass speaker 30, whereby the speaker array section 20 and the bass speaker 30 start outputting sounds.

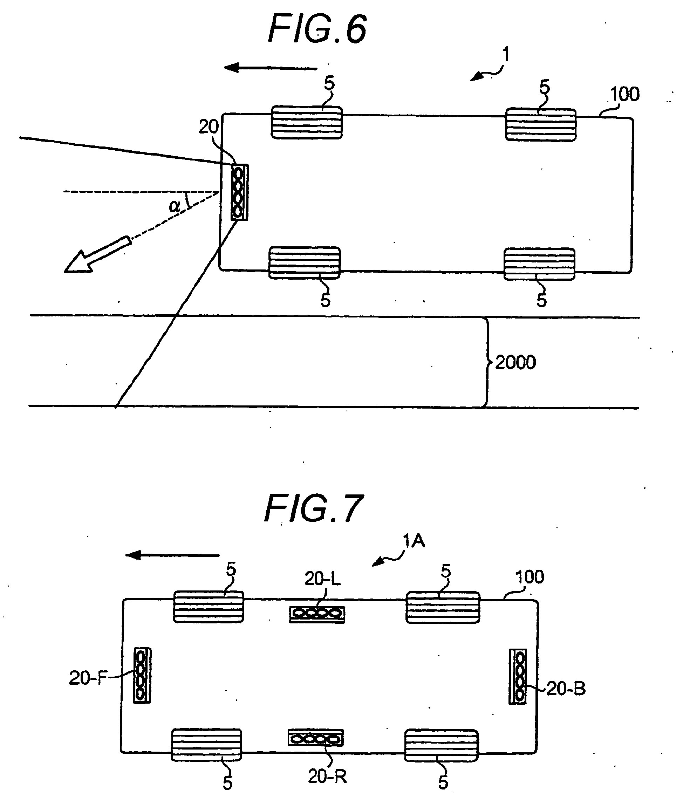

Fig. 6 shows directivity of sounds output from the speaker array section 20. As in the case of Fig. 5, Fig. 6 is an illustration of the vehicle body 100 when viewed from the undersurface side of the vehicle body 100. A sidewalk 2000 is assumed to exist on the right side of the vehicle 1 in its traveling direction. In this case, the control unit 11 controls the signal processing unit 13 in such a way that the speaker array section 20 outputs sounds in a direction displaced toward the sidewalk at an angle α with reference to the traveling direction of the vehicle 1. All the driver has to do is to set a direction (the right side or the left side in the traveling direction) in which the sidewalk 2000 exists and the magnitude of the angle α by operating the operation section 7. It thereby becomes possible to cause sounds to effectively reach pedestrians walking along the sidewalk 2000.

When the driving speed increases, it becomes easy for pedestrians in the neighborhoods of the vehicle to perceive an approach of the vehicle 1 by virtue of road noise, and the like. Therefore, the angle α may also be reduced as the driving speed detected by the speed detection section 6 increases, to thus cause the sounds to reach pedestrians walking far ahead of the vehicle. An output sound level may also be much increased.

Alternatively, the magnitude of the angle α may also change in accordance with the traveling direction controlled by operation of the operation section 7 (e.g., operation of the steering wheel). Specifically, when the traveling direction is changed rightwards, the angle α is increased to shift the sound output direction rightwards with reference to the traveling direction. When the traveling direction is changed leftwards, the essential requirement is to shift the sound output direction leftwards with reference to the traveling direction by reducing the angle α.

When the driving speed detected by the speed detection section 6 surpasses a preset speed as a result of acceleration of the vehicle 1, the control unit 11 stops driving of the electric motor 3, starts driving of the internal combustion engine 2, and causes the power transmission section 4 to transmit motive power of the internal combustion engine 2. Driving sounds are generated as a result of driving of the internal combustion engine 2, so that sounds to be caught by pedestrians are thereby generated. Hence, the control unit 11 causes the signal processing unit 13 to stop acquiring the audio signal and also stops outputting of sounds from the speaker array section 20 and the bass speaker 30. When the driving speed decreases, to thus become slower than the preset speed, the control unit 11 stops driving of the internal combustion engine 2 and resumes driving of the electric motor 3, and causes the signal processing unit 13 to resume acquisition of the audio signal, thereby causing the speaker array section 20 and the bass speaker 30 to output sounds.

Although outputting of sounds from the speaker array section 20 and the bass speaker 30 are stopped when driving of the internal combustion engine 2 is started, a driving speed at which outputting of sounds is stopped may also be set so as to become higher than the driving speed at which driving of the internal combustion engine 2 is started. In this case, outputting of sounds continues for a while after commencement of driving of the internal combustion engine 2, and outputting of sounds can be started before driving of the internal combustion engine 2 is stopped. Thus, interruption of sounds to be caught by pedestrians (sounds from the speaker array section 20 and the bass speaker 30 or the driving sound of the internal combustion engine 2) can be prevented. Alternatively, the driving speed at which outputting of sounds is stopped and the driving speed at which outputting of sounds is resumed may also differ from each other. However, it is desirable that sounds be output when the internal combustion engine 2 is not driven.

As mentioned above, when traveling by means of motive power generated by the electric motor 3, the vehicle 1 of the embodiment of the present invention outputs sound based on the audio signal, thereby causing pedestrians to hear the sounds and perceive an approach of the vehicle 1. At this time, the speaker array 20 that outputs a middle-high frequency signal outputs sounds in a downward direction with reference to the vehicle body 100, to thus cause the road surface 1000 to reflect the sounds. Further, a sound output path is limited by the vehicle body 100, thereby outputting the sounds to surroundings of the vehicle body 100. Therefore, pedestrians on the ground are caused to effectively hear the sounds, to thus be able to perceive an approach of the vehicle 1. The speaker array section 20 is mounted on the undersurface side of the vehicle body 100, which eliminates a necessity for providing an opening, such as a speaker grill, in the side surface, or the like, of the vehicle body 100. For this reason, the degree of design freedom can be enhanced.

Although the embodiment of the present invention has been described thus far, the present invention can be implemented in various forms as provided below.

### <First modification>

In the embodiment, the vehicle 1 is a hybrid vehicle employing the internal combustion engine 2 and the electric motor 3 as drive sources. However, the vehicle 1 may also be an electric vehicle or a fuel cell vehicle that is not equipped with the internal combustion engine 2 and that runs by using the electric motor 3 as the drive source. In this case, noise do not substantially occur at the time of driving of the power source, and noise stemming from acceleration is small. However, when a driving speed increases to a certain extent, large sounds are generated by road noise, and others. Therefore, as in the case of the embodiment, it is better to stop outputting of sounds from the speaker array 20 and the bass speaker 30 when the driving speed has surpassed a preset speed. It may also be better to provide measurement means for measuring a sound level of road noise, and the like, originating from the vehicle 1 and stop outputting of sounds from the speaker array 20 and the bass speaker 30 when the sound level has surpassed a preset level.

The vehicle 1 may also be a vehicle that produces little noise when the power source is driven and generates small noise during acceleration, such as a pneumatic vehicle that employs as a power source a pneumatic engine that drives on compressed air in place of taking as power sources the internal combustion engine 2 and the electric motor 3. Here, for instance, "small noise of a power source" may mean that noise is smaller than the level of sounds output from the speaker array 20 and the bass speaker 30 or that noise is smaller than the sound level of road noise arising when the vehicle travels at a preset speed.

### <Second modification>

In the embodiment, the speaker array section 20 is mounted at the front position on the undersurface side of the vehicle body 100 in the traveling direction. However, a plurality of speaker arrays 20 may also be mounted.

Fig. 7 describes an installation position of the speaker array 20 of a second modification. As shown in Fig. 7, the vehicle may also be embodied as a vehicle 1A having a speaker array section (a front speaker unit) 20-F equivalent to the speaker array section 20 of the embodiment, a speaker array section (a rear speaker unit) 20-B mounted at a rear position on the vehicle in its traveling direction, and speaker array sections (right and left speaker units) 20-R and 20-L mounted respectively on right and left sides of the vehicle in its traveling direction. It is to be noted that a direction of the rear side (a direction opposing the arrow in the drawing) of the vehicle 1A becomes the traveling direction when the vehicle 1A drives back away.

The control unit 11 selects a speaker array that is an object of sound output from among the speaker arrays 20-F, 20-B, 20-L, and 20-R, and controls the signal processing unit 13 so as to supply the speaker array that is an object of sound output with a middle-high frequency channel signal. For instance, when the vehicle 1A is reversed, the speaker array section 20-B outputs sounds. When the vehicle 1A has just started driving, all of the speaker arrays 20-F, 20-B, 20-L, and 20-R may also be taken as objects of sound output, thereby causing all pedestrians located near the vehicle body 100 to hear the sounds.

### <Third modification>

In the embodiment, the speaker array section 20 is mounted at the front position on the vehicle body 100 but may also be placed at another location.

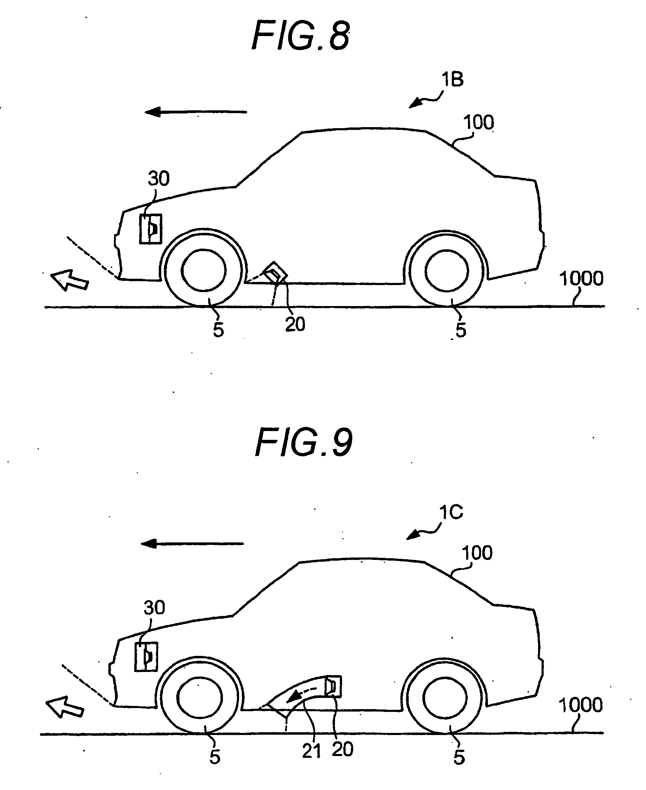

Fig. 8 shows an installation position of the speaker array section 20 of the third modification. As shown in Fig. 8, the vehicle 1 may also be embodied as a vehicle 1B whose speaker array section 20 is mounted in the vicinity of the center on the undersurface side of the vehicle body 100. Even in such a case; sounds output from the speaker array section 20 are caused to undergo reflection between the undersurface of the vehicle body 100 and the road surface 1000, so that the sounds can be output to the surroundings of the vehicle body 100.

### <Fourth modification>

In the embodiment, the speaker array section 20 is mounted on the undersurface side of the vehicle body 100. However, the speaker array may also be provided on another location, so long as the speaker array outputs sounds downwardly from the undersurface of the vehicle body 100.

Fig. 9 describes an installation position of the speaker array section 20 of the fourth modification. As shown in Fig. 9, the vehicle may also be embodied as a vehicle 1 C whose speaker array section 20 is mounted in the vehicle body 100 and which is also provided with sound wave guide path 21 for guiding sounds output from the speaker array section 20 to the undersurface of the vehicle body 100. Even in such a case, sounds output from the speaker array section 20 are guided along the sound wave guide path 21 and output downwardly from the undersurface of the vehicle body 100, so that sounds can be output to the surroundings of the vehicle body 100.

### <Fifth modification>

In the embodiment, sounds output from the speaker array section 20 are processed by the signal processing unit 13, to thus be imparted with directivity. However, directivity may also be imparted by means of the geometry of a speaker, such as a horn-shaped speaker. In this case, the essential requirement is to mechanically control a sound output direction by changing the direction of the horn. Further, directivity is not actively imparted, and a single speaker, and the like, may also substitute for directivity. However, it is desirable that directivity be imparted to sounds so that sounds can be caused to reach a specific range while attenuation of a sound level is suppressed.

### <Sixth modification>

In the embodiment, sounds output from the speaker array section 20 and the bass speaker 30 are based on the audio signal stored in the storage section 12. However, parameters for use in generating an audio signal may also be stored in the storage section 12. The control unit 11 may generate an audio signal by combination of the parameters; buffer the thus-generated audio signal into the RAM; and cause the signal processing unit 13 to acquire the audio signal. At this time, an audio signal can also be generated in such a way that some of the parameters are changed in accordance with the driving speed detected by the speed detection section 6, operation of the operation section 7 (actuation of an accelerator), and the like. In such a case, an audio signal, such as regeneration of an actual engine sound, can also be generated. It is possible to employ any of the techniques described in; for instance, JP-A-2007-256526 , JP-A-2007-256527 , JP-A-2007-258980 , JP-A-2007-264206 , and others, for generating an audio signal.

In addition to acquiring from storage unit, such as the storage section 12 and RAM, the signal processing unit 13 may acquire an audio signal via a network, such as the Internet. In such a case, the essential requirement for the vehicle 1 is to be provided with communication means that establishes a connection and communication with a network. It is possible to arrange the signal processing unit 13 to acquire an audio signal received from a server connected to a network by means of communication effected by the communication means.

### <Seventh modification>

In the embodiment, the middle-high frequency channel signal is processed by the signal processing unit 13 in such a way that sounds output from the speaker array section 20 are output in one direction. However, the sounds may also be output so as to be output in a plurality of directions. For instance, in the embodiment, when the sidewalks 2000 exist on both sides of the vehicle 1 in a road of one-way traffic, and the like, the driver may output sounds directed toward the respective sidewalks 2000.

The vehicle 1 may also be provided with detection means for detecting the direction (position) of a pedestrian by means of image recognition, an infrared sensor, and others, and the sound output direction may also be controlled so as to be directed toward the thus-detected pedestrian. At this time, when a plurality of pedestrians are detected, it is better to output the sounds generated by the speaker array section 20 in a plurality of directions and control sound output directions in respective directions. Further, it may also be possible to output sounds toward a detected pedestrian and simultaneously keep performing sound output operations in the control modes described in connection with the embodiment. In this case, the essential requirement is that sounds to be emitted to a pedestrian should be output so as to be focused on a neighborhood of the detected pedestrian and that sounds output regardless of detection of a pedestrian should be caused to be heard within a wide range by means of spread directivity.

## Claims

1. A vehicle comprising:
a vehicle body (100);
an electric motor (3);
wheels (5) that are provided between the vehicle body and a road surface (1000) and that are rotated by transmitted motive power, to thus drive the vehicle body;
a power transmission section (4) that transmits motive power generated by the electric motor (3) to the wheels (5);
a detection section (6) that detects a driving speed of the vehicle body (100);
a speaker unit (20) that outputs a sound based on a supplied audio signal downwardly from an undersurface of the vehicle body (100) so as to reflect on the road surface, thereby to output the reflected sound to surroundings of the vehicle body;
a supply section (13) that acquires an audio signal and supplies the audio signal to the speaker unit when a driving speed of the vehicle body detected by the detection section (6) is less than a preset speed;
an internal combustion engine (2); and
a power control unit (11) arranged to drive the internal combustion engine (2) when the driving speed of the vehicle body (100) detected by the detection section (6) comes to a preset speed or more, wherein
the power transmission section (4) is operable to transmit motive power generated as a result of driving of the internal combustion engine (2) to the wheels (5);
the supply section (13) is arranged to stop supply of the audio signal when the internal combustion engine (2) is driven; **characterised in that**
the speaker unit (20) includes a speaker array of multiple speakers (201-204); and
the control unit (11) is arranged to control a direction of the sound output by the speaker unit (20) at a predetermined angle with respect to a traveling direction of the vehicle.

2. The vehicle according to claim 1, further comprising:
a bass speaker unit (30) having a speaker (3) arranged to be supplied with an audio signal of a low frequency band which is lower than a frequency band of the audio signal supplied to the speaker unit (20) and is arranged to output sounds based on the audio signal;
a diaphragm (35a) that has a resonance frequency in the low frequency band for producing resonance by means of an output of sounds from the speaker (31); and
a housing (35) that defines therein a sealed space along with the diaphragm (35a), wherein
the speaker (31) is provided in the sealed space;
the supply section (13) is arranged to supply the speaker unit (30) with an audio signal of a frequency band that is higher than the low frequency band and to supply the audio signal of low frequency band to the speaker (31) of the bass speaker unit (30); and
sound output from the speaker unit (30) exhibits directivity.

3. The vehicle according to claim 1 or 2, wherein the predetermined angle is reduced as the driving speed detected by the detection section increases.

4. The vehicle according to claim 1 or 2, wherein a magnitude of the predetermined angle changes in accordance with the traveling direction by operation of an operation section.

5. The vehicle according to any one of claims 1 to 4, wherein the speaker unit (20) includes a front speaker unit (20-F), a rear speaker unit (20-B), a right speaker unit (20-R), and a left speaker unit (20-L), that are provided on a front, a rear, a right, and a left of the vehicle body, respectively.

## Patentansprüche

1. Fahrzeug, umfassend:
eine Fahrzeugkarosserie (100);
einen Elektromotor (3);
Räder (5), die zwischen der Fahrzeugkarosserie und einer Straßenoberfläche (1000) vorgesehen sind und die durch übertragene Bewegungsenergie rotiert werden, um damit die Fahrzeugkarosserie anzutreiben,
einen Leistungsübertragungsabschnitt (4), der vom Elektromotor (3) erzeugte Bewegungsenergie an die Räder (5) überträgt;
einen Detektionsabschnitt (6), der eine Fahrgeschwindigkeit der Fahrzeugkarosserie (100) detektiert;
eine Lautsprechereinheit (20), die ein Geräusch, basierend auf einem zugeführten Audiosignal von einer Unterseite der Fahrzeugkarosserie (100) abwärts ausgibt, so dass es an der Straßenoberfläche reflektiert wird, wodurch das reflektierte Geräusch an die Umgebung der Fahrzeugkarosserie auszugeben;
eine Zuführabschnitt (13), der eine Audiosignal erfasst und das Audiosignal der Lautsprechereinheit zuführt, wenn eine durch den Detektionsabschnitt (6) detektierte Fahrgeschwindigkeit der Fahrzeugkarosserie kleiner als eine eingestellte Geschwindigkeit ist;
einen Innenverbrennungsmotor (2); und
eine Leistungssteuereinheit (11), die dafür ausgelegt ist, den Innenverbrennungsmotor (2) zu betreiben, wenn eine durch den Detektionsabschnitt (6) detektierte Fahrgeschwindigkeit der Fahrzeugkarosserie (100) eine eingestellte Geschwindigkeit oder mehr erreicht, wobei
der Leistungsübertragungsabschnitt (4) betreibbar ist, eine als Ergebnis des Betreibens des Innenverbrennungsmotors (2) erzeugte Bewegungsenergie an die Räder (5) zu übertragen,
der Zuführabschnitt (13) ausgelegt ist, die Zufuhr des Audiosignals zu stoppen, wenn der Innenverbrennungsmotor (2) betrieben wird;, **dadurch gekennzeichnet, dass**
die Lautsprechereinheit (20) ein Lautsprecherfeld aus mehreren Lautsprechern (201-204) beinhaltet; und
die Steuereinheit (11) ausgelegt ist, eine Richtung des aus der Lautsprechereinheit (20) ausgegebenen Geräuschs auf eine vorgegebenen Winkel in Bezug auf eine Fahrtrichtung des Fahrzeugs zu steuern.

2. Fahrzeug gemäß Anspruch 1, weiter umfassend:
eine Bass-Lautsprechereinheit (30) mit einem Lautsprecher (3), der ausgelegt ist, mit einem Audiosignal eines niedrigen Frequenzbands versorgt zu werden, das niedriger als ein Frequenzband des der Lautsprechereinheit 820) zugeführten Audiosignals ist, und ausgelegt ist, Geräusche basierend auf dem Audiosignal auszugeben;
ein Diaphragma (35a), das eine Resonanzfrequenz im Niederfrequenzband aufweist, zur Erzeugung von Resonanz mittels einer Ausgabe von Geräuschen aus dem Lautsprecher (31);
ein Gehäuse (35), das zusammen mit dem Diaphragma (25a) darin einen abgedichteten Raum definiert, wobei
der Lautsprecher (31) im abgedichteten Raum vorgesehen ist;
der Zuführabschnitt (13) ausgelegt ist, der Lautsprechereinheit (30) ein Audiosignal eines Frequenzbands zuzuführen, das höher als das Niederfrequenzband ist, und das Audiosignal des niedrigen Frequenzbands dem Lautsprecher (31) der Basslautsprechereinheit (30) zuzuführen; und
ein aus der Lautsprechereinheit (30) ausgegebenes Geräusch eine Direktivität zeigt.

3. Fahrzeug gemäß Anspruch 1 oder 2, wobei der vorbestimmte Winkel mit steigender, durch den Detektionsabschnitt detektierter Fahrgeschwindigkeit verkleinert wird.

4. Fahrzeug gemäß Anspruch 1 oder 2, wobei sich die Größe des vorbestimmten Winkels sich anhand der Fahrtrichtung durch Betrieb eines Betriebsabschnitts ändert.

5. Fahrzeug gemäß einem der Ansprüche 1 bis 4, wobei die Lautsprechereinheit (20) eine Frontlautsprechereinheit (20-F), eine Hecklautsprechereinheit (20-B), eine rechte Lautsprechereinheit (20-R) und eine linke Lautsprechereinheit (20-L) beinhaltet, die an einer Front, einem Heck, rechts bzw. links am Fahrzeug vorgesehen sind.

## Revendications

1. Véhicule comprenant :
une carrosserie de véhicule (100) ;
un moteur électrique (3) ;
des roues (5) qui sont placées entre la carrosserie de véhicule et une surface de route (1000) et qui sont mises en rotation par une puissance motrice transmise, pour ainsi entraîner la carrosserie de véhicule ;
une section de transmission de puissance (4) qui transmet la puissance motrice générée par le moteur électrique (3) aux roues (5) ;
une section de détection (6) qui détecte une vitesse d'entraînement de la carrosserie de véhicule (100) ;
une unité de haut-parleur (20) qui sort un son en fonction d'un signal audio fourni vers le bas depuis une surface inférieure de la carrosserie de véhicule (100) de façon à se réfléchir sur la surface de la route, pour ainsi sortir le son réfléchi aux environs de la carrosserie de véhicule ;
une section d'alimentation (13) qui acquiert un signal audio et fournit le signal audio à l'unité de haut-parleur quand une vitesse d'entraînement de la carrosserie de véhicule détectée par la section de détection (6) est inférieure à une vitesse préétablie ;
un moteur à combustion interne (2) ; et
une unité de commande de puissance (11) agencée pour entraîner le moteur à combustion interne (2) quand la vitesse d'entraînement de la carrosserie de véhicule (100) détectée par la section de détection (6) atteint ou dépasse une vitesse préétablie, dans lequel
la section de transmission de puissance (4) peut fonctionner pour transmettre une puissance motrice générée comme résultat de l'entraînement du moteur à combustion interne (2) aux roues (5) ;
la section d'alimentation (13) est agencée pour stopper l'alimentation du signal audio quand le moteur à combustion interne (2) est entraîné ; **caractérisé en ce que**
l'unité de haut-parleur (20) inclut un réseau de haut-parleurs multiples (201-204) ; et
l'unité de commande (11) est agencée pour commander une direction de la sortie de son par l'unité de haut-parleur (20) à un angle prédéterminé par rapport à une direction d'avance du véhicule.

2. Véhicule selon la revendication 1, comprenant en outre :
une unité de haut-parleur basse (30) comportant un haut-parleur (3) agencé pour être alimenté par un signal audio d'une bande basse fréquence qui est inférieure à une bande de fréquence du signal audio alimenté vers l'unité de haut-parleur (20) et est agencée pour sortir des sons en fonction du signal audio ;
un diaphragme (35a) qui a une fréquence de résonance dans la bande basse fréquence pour produire une résonance au moyen d'une sortie de sons venant du haut-parleur (31) ; et
un logement (35) qui définit à l'intérieur un espace scellé avec le diaphragme (35a), dans lequel
le haut-parleur (31) est placé dans l'espace scellé ;
la section d'alimentation (13) est agencée pour fournir à l'unité de haut-parleur (30) un signal audio d'une bande de fréquence qui est supérieure à la bande fréquence basse et pour fournir le signal audio de bande de fréquence basse au haut-parleur (31) de l'unité de haut-parleur basse (30) ; et
la sortie de son depuis unité de haut-parleur (30) présente une directivité.

3. Véhicule selon la revendication 1 ou 2, dans lequel l'angle prédéterminé est réduit quand la vitesse d'entraînement détectée par la section de détection augmente.

4. Véhicule selon la revendication 1 ou 2, dans lequel une amplitude de l'angle prédéterminé change selon la direction d'avance par l'actionnement d'une section d'actionnement.

5. Véhicule selon l'une quelconque des revendications 1 à 4, dans lequel l'unité de haut-parleur (20) inclut une unité de haut-parleur avant (20-F), une unité de haut-parleur arrière (20-B), une unité de haut-parleur droit (20-R), et une unité de haut-parleur gauche (20-L), qui sont placées sur un avant, un arrière, une droite, et une gauche de la carrosserie de véhicule, respectivement.
